(19) Europäisches Patentamt
European Patent Office
Office européen des brevets

(11) **EP 2 961 095 A1**

(12) **EUROPEAN PATENT APPLICATION**

(43) Date of publication:
**30.12.2015 Bulletin 2015/53**

(51) Int Cl.:
**H04L 9/08** $^{(2006.01)}$     **H04L 9/30** $^{(2006.01)}$

(21) Application number: **14306015.0**

(22) Date of filing: **27.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Joye, Marc**
  **35576 CESSON SEVIGNE (FR)**
• **Libert, Benoit**
  **35576 CESSON SEVIGNE (FR)**

(74) Representative: **Huchet, Anne**
**Technicolor**
**1-5 rue Jeanne d'Arc**
**92130 Issy-Les-Moulineaux (FR)**

(54) **Threshold cryptosystem, corresponding electronic devices and computer program products**

(57)     In one embodiment, it is proposed a method for encrypting a plaintext $M \in \mathbb{G}$, where $\mathbb{G}$ is a DDH-hard group of prime order $p$. The method is executed by an electronic device, and is remarkable in that it comprises:

- obtaining a public key $PK = (\mathbb{G}, N, g, h, X, H, G)$ where $N$ is a RSA module, elements $g, h$ are random elements belonging to said group $\mathbb{G}$, $X = g^x h^y \in \mathbb{G}$, where elements $x, y$ are random values from a ring $\mathbb{Z}_p$, and $H, G$ are hash functions;

- obtaining (201) two random elements $r, s$, each element belonging to the ring $\mathbb{Z}_p$;
- determining (202) a vector being $(C_0, C_1, C_2) = (M \cdot X^r, g^r, h^r)$;
- determining (203) a proof $\pi$ that $\log_g(C_1) = \log_h(C_2)$, said proof comprising two components $c, t'$, with $c = H(C_0, C_1, C_2, g^s, h^s)$ and $t' = s + c \cdot r \bmod p$;
- delivering a ciphertext $C = (C_0, C_1, C_2, \pi) = (C_0, C_1, C_2, c, t') \in \mathbb{G}^3 \times \mathbb{Z}_p^2$.

M     PK

201

200

202

203

C

FIG. 2

EP 2 961 095 A1

**Description**

Field of the disclosure

The disclosure relates to cryptography and more precisely to a threshold cryptosystem where the decryption capability is split within a quorum of decryption servers.

Background of the disclosure

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Threshold cryptography avoids single points of failure by splitting keys into $n > 1$ shares which are held by servers (a server being an electronic device) in such a way that at least t out of $n$ servers should contribute to private key operations. In $(t; n)$ threshold cryptosystems, an adversary breaking into up to t - 1 servers should not compromise the security of the system (i.e. he cannot decrypt ciphertexts). Moreover, at least $t \leq n$ servers must contribute to the decryption process.

Designing secure threshold cryptography public key schemes has proven to be a highly non-trivial task. Chosen-ciphertext security (or IND-CCA for short) is recognized as the standard security notion for public-key encryption. Securely distributing the decryption procedure of CCA-secure public-key schemes is challenging. As discussed in the article "Securing threshold cryptosystems against chosen ciphertext attack" by V. Shoup and R. Gennaro, published in the conference proceedings of Eurocrypt 1998, or in the article "Threshold cryptosystems Secure against chosen-ciphertext attacks" by P.-A. Fouque et D. Pointcheval, published in the conference proceedings of Asiacrypt 2001, the difficulty is that decryption servers should return their partial decryption results before knowing whether the incoming ciphertext is valid and, in some cases, partial decryptions of ill-formed ciphertexts (or not well-formed ciphertexts) may leak useful information to the adversary. For this reason, it is difficult to "thresholdize" (or convert into a threshold scheme), without interaction, the original Cramer-Shoup system, presented in the article "A practical public key cryptosystem provably secure against adaptive chosen ciphertext attack", by R. Cramer et al., published in the conference proceedings of Crypto 1998, due to the fact that the validity of ciphertexts cannot be publicly verified.

Shoup and Gennaro, in the previous mentioned article "Securing threshold cryptosystems against chosen ciphertext attack", have proposed the first CCA-secure threshold cryptosystem in the random oracle model assuming static corruptions. In the standard model, Canetti and Goldwasser, in the article "An efficient threshold public key cryptosystem secure against adaptive chosen ciphertext attack", published in the conference proceedings of Eurocrypt 1999, showed a threshold variant of the Cramer-Shoup encryption scheme. Unfortunately, their scheme requires interaction among decryption servers to obtain robustness (i.e., ensure that no coalition of t - 1 active malicious servers can prevent uncorrupted servers from successfully decrypting) as well as to render invalid ciphertexts harmless. Cramer, Damgård and Ishai suggested in the article entitled "Share Conversion, Pseudorandom secret-sharing and applications to secure computation", published in the conference proceedings of TCC 2005, a method to generate randomizers without interaction but it is only efficient for a small number of servers (i.e. it cannot be generalized to the case with numerous servers).

Other threshold variants of Cramer-Shoup were suggested in the article "Robust Distributed Multiplication without Interaction" by M. Abe, published in the conference proceedings of Crypto 1999, or in the article "An Efficient Two-Party Public Key Cryptosystem Secure against Adaptive Chosen Ciphertext Attack" by P. MacKenzie, published in the conference proceedings of PKC 2003. More precisely, Abe notably showed in the previous mentioned article "Robust Distributed Multiplication without Interaction", how to achieve optimal resilience (namely, guarantee robustness as long as the adversary corrupts a minority of t < n/2 servers) in the Canetti-Goldwasser system. In the last decade, generic constructions of CCA-secure threshold cryptosystems with static security were put forth (see for example the article entitled "Chosen-Ciphertext Security of Multiple Encryption" by Y. Dodis et al., published in the conference proceedings ofTCC 2005).

Boneh, Boyen and Halevi, in the article entitled "Chosen Ciphertext Secure Public Key Threshold Encryption Without Random Oracles", published in the conference proceedings of the conference CT-RSA 2006, proposed a fully non-interactive robust CCA-secure threshold cryptosystem with a security proof in the standard model: in their scheme, decryption servers can generate their decryption shares without any communication with other servers.

Wee, in the article entitled "Threshold and Revocation Cryptosystems via Extractable Hash Proofs", published in the conference proceedings of Eurocrypt 2011, defined a framework allowing to construct non-interactive threshold signatures and (chosen-ciphertext secure) threshold cryptosystems in a static corruption model.

Most of the previously mentioned threshold systems have been analyzed in a static corruption model, where the adversary chooses which servers it wants to corrupt before the scheme is set up. Unfortunately, adaptive adversaries-who can choose whom to corrupt at any time, as a function of their entire view of the protocol execution- are known to be strictly stronger. The Canetti-Goldwasser system can be proved robust and adaptively secure when the threshold t is sufficiently small (typically, when t = $0(n^{1/2})$) but supporting an optimal number of faulty servers is clearly preferable.

Assuming reliable erasures, Canetti et al., in the article "Adaptive Security for Threshold Cryptosystems", published in the conference proceedings of Crypto 1999, devised adaptively secure protocols for the distributed generation of discrete-logarithm-based keys and DSA signatures. Their techniques were re-used in threshold RSA signatures in the article "Simplified Threshold RSA with Adaptive and Proactive Security", by J. Almansa et al., published in the conference proceedings of Eurocrypt 2006. Frankel, MacKenzie and Yung independently showed different methods to achieve adaptive security in the erasure-enabled setting in the articles "Adaptively-Secure Distributed Public-Key System", published in the conference proceedings of ESA 1999, and in "Adaptively-Secure Optimal-Resilience Proactive RSA", published in the conference proceedings of Asiacrypt 1999.

Jarecki and Lysyanskaya, in the article "Adaptively Secure Threshold Cryptography: Introducing Concurrency, Removing Erasures", published in the conference proceedings of Eurocrypt 2000, eliminated the need for erasures and gave an adaptively secure variant of the Canetti-Goldwasser threshold cryptosystem. Unfortunately, their scheme requires a fair amount of interaction among decryption servers. Lysyanskaya and Peikert, in the article "Adaptive Security in the Threshold Setting: From Cryptosystems to Signature Schemes", published in the conference proceedings of Asiacrypt 2001, also dealt with adaptive adversaries but their schemes also are interactive. Abe and Fehr, in the article "Adaptively Secure Feldman VSS and Applications to Universally-Composable Threshold Cryptograph", published in the conference proceedings of Crypto 2004, showed how to dispense with zero-knowledge proofs in the Jarecki-Lysyanskaya construction so as to prove it secure in (a variant of) the universal composability framework but without completely eliminating interaction from the decryption procedure.

In 2010, Qin et al. , in the article entitled "Threshold Public-Key Encryption with Adaptive Security and Short Ciphertexts", published in the conference proceedings of ICICS 2010, suggested a non-interactive threshold cryptosystem (more precisely, a threshold broadcast encryption scheme) with adaptive security. Its downside is its lack of scalability since private key shares consist of $0(n)$ elements, where $n$ is the number of servers (while, in prior schemes, the share size only depends on the security parameter). Moreover, the security proof requires the threshold t to be at most polylogarithmic in the security parameter, even if $n$ is polynomial.

Libert and Yung showed in the article "Non-interactive CCA-Secure Threshold Cryptosystems with Adaptive Security: New Framework and Constructions", published in the conference proceedings of TCC 2012, and in the article "Adaptively Secure Non-Interactive Threshold Cryptosystems", published in the conference proceedings of ICALP 2011, several constructions of adaptively secure non-interactive and CCA-secure robust threshold cryptosystems. Unfortunately, all the aforementioned constructions are limited to verification keys of size $0(n)$ when it comes to hedge against malicious adversaries: the reason is that, for each private key share, there must be a corresponding public verification key which allows testing the validity of decryption shares.

So far, in all known constructions of chosen-ciphertext-secure threshold cryptosystems, robustness against malicious adversaries has only been achieved using verification keys of size $0(n)$, if $n$ denotes the number of servers. One goal of one embodiment of the disclosure is to propose a robust threshold cryptosystem where verification keys have constant size, regardless of the number of servers.

Moreover, it is one goal of one embodiment of the disclosure to propose a scheme that is secure against chosen-ciphertext attacks, non-interactive (meaning that decryption servers do not communicate among them during the decryption protocol) and that can also resist adaptive corruptions. In addition, it is one goal of one embodiment of the disclosure to propose a scheme that should retain the decryption consistency property.

Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure is directed to a method for encrypting a plaintext $M \in \mathbb{G}$, where G is a DDH-hard group of prime order $p$. Such method is executed by an electronic device, and is remarkable in that it comprises:

- obtaining a public key $PK = (\mathbb{G}, N, g, h, X, H, G)$ where $N$ is a RSA module, elements $g, h$ are random elements belonging to said group $\mathbb{G}$, $X = g^x h^y \in \mathbb{G}$, where elements *x, y* are random values from a ring $\mathbb{Z}_p$, and *H, G* are hash functions;

- obtaining two random elements *r, s,* each element belonging to the ring $\mathbb{Z}_p$,

- determining a vector being $(C_0, C_1, C_2) = (M.X^r, g^r, h^r)$;

- determining a proof $\pi$ that $\log_g(C_1) = \log_h(C_2)$, said proof comprising two components *c, t',* with $c = H(C_0, C_1, C_2, g^s, h^s)$ and $t' = s + c.r \bmod p$ ;

- delivering a ciphertext $C = (C_0, C_1, C_2, \pi) = (C_0, C_1, C_2, c, t') \in \mathbb{G}^3 \times \mathbb{Z}_p{}^2$.

In a preferred embodiment, it is proposed a method for publicly verifying a ciphertext C. Such method is executed on an electronic device, and is remarkable in that it comprises:

- verifying that said ciphertext *C* belongs to $\mathbb{G}^3 \times \mathbb{Z}_p{}^2$, where $\mathbb{G}$ is a DDH-hard group of prime order *p*; in the case that said ciphertext *C* belongs to $\mathbb{G}^3 \times \mathbb{Z}_p{}^2$, meaning that $C = (C_0, C_1, C_2, \pi)$, with proof $\pi = (c, t') \in \mathbb{Z}_p{}^2$, the method further comprises:

- obtaining, from a public key, an element *g* belonging to said group $\mathbb{G}$ and a hash function *H*;
- verifying a validity of said proof $\pi$ by determining a value $H(C_0, C_1, C_2, g^{t'}. C_1^{-c}, h^{t'}. C_2^{-c})$, and comparing it with a value of c;
- outputting that said proof $\pi$ is valid in case of equality between the value of c and the value of $H(C_0, C_1, C_2, g^{t'}.C_1^{-c}, h^{t'}.C_2^{-c})$.

In a preferred embodiment, it is proposed a method for determining at least one partial decryption share from a ciphertext C, in a threshold cryptosystem. Such method is executed on an electronic device, and is remarkable in that it comprises:

- verifying that said ciphertext *C* belongs to $\mathbb{G}^3 \times \mathbb{Z}_p{}^2$, where $\mathbb{G}$ is a DDH-hard group of prime order *p*; in the case that said ciphertext C belongs to $\mathbb{G}^3 \times \mathbb{Z}_p{}^2$ meaning that C = $(C_0, C_1, C_2, \pi)$, with proof $\pi = (c, t') \in \mathbb{Z}_p{}^2$, the method further comprises:
- obtaining a private key $SK_i$ comprising a secret element and a piece of information that said private key $SK_i$ is an i-th coordinate of a secret key vector, said piece of information being derived from a same verification key for each private key;
- determining an encryption of said piece of information, delivering at least an encrypted piece of information;
- determining a non-interactive proof of knowledge for said secret element and said encrypted piece of information;
- determining a partial decryption part from said ciphertext and said secret element, said at least one partial decryption share being a concatenation of said encrypted piece of information, said non-interactive proof of knowledge and said partial decryption part.

In a preferred embodiment, it is proposed a method for verifying a validity of at least one partial decryption share generated according to the previous method, with a verification key, in a threshold cryptosystem. Such method for verifying is executed on an electronic device, and is remarkable in that it comprises combining elements of said a verification key with encrypted piece of information comprised in said of at least one partial decryption share and in that said verification key comprises a number of elements which is independent of a number of electronic devices involved in said threshold cryptosystem .

In a preferred embodiment, it is proposed a method for deciphering a ciphertext *C*. Such method is executed on an electronic device, and is remarkable in that it comprises:

- verifying that said ciphertext *C* belongs to $\mathbb{G}^3 \times \mathbb{Z}_p{}^2$, where $\mathbb{G}$ is a DDH-hard group of prime order *p*; in the case that said ciphertext *C* belongs to $\mathbb{G}^3 \times \mathbb{Z}_p{}^2$ meaning that $C = (C_0, C_1, C_2, \pi)$, with proof $\pi = (c, t') \in \mathbb{Z}_p{}^2$, the method further comprises:

- obtaining at least *t* partial decryption shares generated according to the previous mentioned method for determining at least one partial decryption share ;
- verifying validity of non-interactive proof of knowledge comprised in each partial decryption share;
- combining each partial decryption part comprised in at least *t* partial decryption shares, with a part of said ciphertext *C*, said combining delivering a plaintext *M*.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory"*) or a microelectronic circuit ROM or a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

Let's also remark that a step of obtaining an element/value in the present document can be viewed either as a step of reading such element/value in a memory unit of an electronic device or a step of receiving such element/value from another electronic device via communication means.

In a variant, it is proposed an electronic device comprising means for encrypting a plaintext $M \in \mathbb{G}$, where $\mathbb{G}$ is a DDH-hard group of prime order *p*. The electronic device is remarkable in that it comprises:

- means for obtaining a public key $PK = (\mathbb{G}, N, g, h, X, H, G)$ where *N* is a RSA module, elements *g, h* are random elements belonging to said group $\mathbb{G}$, $X = g^x h^y \in \mathbb{G}$, where elements *x, y* are random values from a ring $\mathbb{Z}_p$, and *H, G* are hash functions;

- means for obtaining two random elements $r$, $s$, each element belonging to the ring $\mathbb{Z}_p$;

- means for determining a vector being $(C_0, C_1, C_2) = (M.X^r, g^r, h^r)$;

- means for determining a proof $\pi$ that $\log_g(C_1) = \log_h(C_2)$, said proof comprising two components $c$, $t'$, with $c = H(C_0, C_1, C_2, g^s, h^s)$ and $t' = s + c. \ r \ mod \ p$ ;

- means for delivering a ciphertext $C = (C_0, C_1, C_2, \pi) = (C_0, C_1, C_2, c, t') \in \mathbb{G}^3 \times \mathbb{Z}_p^2$.

In a variant, it is proposed an electronic device comprising means for publicly verifying a ciphertext C. Such electronic device is remarkable in that it comprises:

- means for verifying that said ciphertext $C$ belongs to $\mathbb{G}^3 \times \mathbb{Z}_p^2$, where $\mathbb{G}$ is a DDH-hard group of prime order

  $p$; in the case that said ciphertext $C$ belongs to $\mathbb{G}^3 \times \mathbb{Z}_p^2$ meaning that $C = (C_0, C_1, C_2, \pi)$, with proof

  $\pi = (c, t') \in \mathbb{Z}_p^2$, the electronic device further comprises:

- means for obtaining, from a public key, an element $g$ belonging to said group $\mathbb{G}$ and a hash function $H$;
- means for verifying a validity of said proof $\pi$ by determining a value $H(C_0, C_1, C_2, g^{t'}.C1^{-c}, h^t.C_2^{-c})$, and comparing it with a value of $c$;
- means for outputting that said proof $\pi$ is valid in case of equality between the value of $c$ and the value of $H(C_0, C_1, C_2, g^{t'}.C_1^{-c}, h^{t'}.C_2^{-c})$.

In a variant, it is proposed an electronic device comprising means for determining at least one partial decryption share from a ciphertext $C$, in a threshold cryptosystem. Such electronic device is remarkable in that it comprises:

- means for verifying that said ciphertext $C$ belongs to $\mathbb{G}^3 \times \mathbb{Z}_p^2$, where $\mathbb{G}$ is a DDH-hard group of prime order

  $p$; in the case that said ciphertext $C$ belongs to $\mathbb{G}^3 \times \mathbb{Z}_p^2$ meaning that $C = (C_0, C_1, C_2, \pi)$, with proof

  $\pi = (c, t') \in \mathbb{Z}_p^2$, the electronic device further comprises:

- means for obtaining a private key $SK_i$ comprising a secret element and a piece of information that said private key $SK_i$ is an $i$-th coordinate of a secret key vector, said piece of information being derived from a same verification key for each private key;
- means for determining an encryption of said piece of information, delivering at least an encrypted piece of information;
- means for determining a non-interactive proof of knowledge for said secret element and said encrypted piece of information;
- means for determining a partial decryption part from said ciphertext and said secret element, said at least one partial decryption share being a concatenation of said encrypted piece of information, said non-interactive proof of knowledge and said partial decryption part.

In a variant, it is proposed an electronic device comprising means for deciphering a ciphertext $C$. Such electronic device is remarkable in that it comprises:

- means for verifying that said ciphertext $C$ belongs to $\mathbb{G}^3 \times \mathbb{Z}_p^2$, where $\mathbb{G}$ is a DDH-hard group of prime order

  $p$; in the case that said ciphertext $C$ belongs to $\mathbb{G}^3 \times \mathbb{Z}_p^2$ meaning that $C = (C_0, C_1, C_2, \pi)$, with proof

  $\pi = (c, t') \in \mathbb{Z}_p^2$, the electronic device further comprises:

- means for obtaining at least $t$ partial decryption shares generated according to an electronic device comprising means for determining at least one partial decryption share;

- means for verifying validity of non-interactive proof of knowledge comprised in each partial decryption share;
- means for combining each partial decryption part comprised in at least *t* partial decryption shares, with a part of said ciphertext C, said means for combining delivering a plaintext *M*.

Brief description of the figures

The above and other aspects of the disclosure will become more apparent by the following detailed description of exemplary embodiments thereof with reference to the attached drawings in which:

- Figure 1 discloses a flowchart which depicts steps performed during the key generation process according to one embodiment of the disclosure;
- Figure 2 discloses a flowchart which depicts steps performed during the encryption process according to one embodiment of the disclosure;
- Figure 3 discloses a flowchart which depicts steps performed during a ciphertext verification process according to one embodiment of the disclosure;
- Figure 4 discloses a flowchart which depicts steps performed during a partial decryption process applied on a obtained ciphertext *C*, executed by one electronic device among the *t* electronic devices necessary to perform the real decryption of the ciphertext (in order to recover the plaintext *M*);
- Figure 5 discloses a flowchart which depicts steps performed during a decryption process, when an electronic device obtains several partial decryption that should be combined in order to recover a protected plaintext *M*;
- Figure 6 presents a device that can be used to perform one or several steps of methods/processes disclosed in the present document.

Detailed description

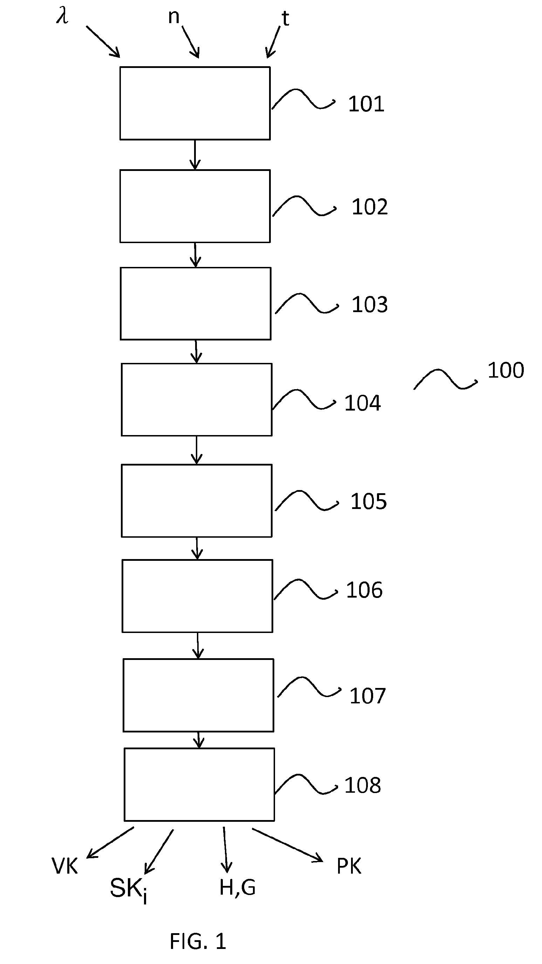

Figure 1 discloses a flowchart which depicts steps performed during the key generation process according to one embodiment of the disclosure.

In order to generate private keys that are then stored on electronic devices (such as servers), and a corresponding public key, the following steps of a key generation process, referenced 100, are performed by an electronic device:

- Obtaining a security parameter λ (that is initialized or chosen by a user for example), and a number t corresponding to the number of electronic devices that must participate in order to perform a decryption of an encrypted message (or plaintext), among a number *n* of potential electronic devices in the scheme;

- Choosing, in a step referenced 101, a DDH (which stands for "*Decisional Diffie*-Hellman")-hard group $\mathbb{G}$ of prime order $p > 2^\lambda$ (e.g. a group of prime order with no efficiently computable bilinear map);

- Picking, in a step referenced 102, random elements in the chosen group $\mathbb{G}$ and in $\mathbb{Z}_p$ : $g, h \xleftarrow{R} \mathbb{G}$, and $x, y \xleftarrow{R} \mathbb{Z}_p$ (where the notation, for an integer $n \geq 1, A_1, ..., A_1, ..., A_n \xleftarrow{R} B$ means that elements (or variables) $A_1, ..., A_n$ are chosen randomly in the algebraic structure *B*) ;

- Determining, in a step referenced 103, the value of the element $X = g^x h^y \in \mathbb{G}$;

- Choosing, in a step referenced 104, an RSA modulus $N = p_1 q_1$ such that $p_1 = 2p'_1 + 1$, and $q_1 = 2q'_1 + 1$, where $p'_1, q'_1 > 2^{l(\lambda)+1}$ are also prime;

- Choosing, in a step referenced 105, three random quadratic residues in $\mathbb{Z}_N^*$ : $z, h_0, h_1 \xleftarrow{R} \mathbb{QR}_N$ ;

- Choosing, in a step referenced 106, two random polynomials $P_1(Z), P_2(Z) \in \mathbb{Z}_p$ [Z] of degree *t* - 1 such that $P_1(0) = x$ and $P_2(0) = y$;

- Defining, in a step referenced 107, the elements $e_1, ..., e_n, e_{n+1}$ that are the smallest *n* + 1 prime numbers larger than *p*;

- Determining, in a step referenced 108, the elements $V_1$ and $V_2$ defined as follows:

$$V_1 = \prod_{i=1}^n S_i^{P_1(i) \bmod p} . S_{n+1}^{r_1} \quad \text{and} \quad V_2 = \prod_{i=1}^n S_i^{P_2(i) \bmod p} . S_{n+1}^{r_2} \quad \text{where} \quad S_i = z^{\prod_{j=1, j \neq i}^{n+1} e_j} \quad \text{for}$$

each $i \in \{1, ..., n + 1\}$ and $r_1, r_2 \; r_1, r_2 \xleftarrow{R} \mathbb{Z}_{\lfloor N/4 \rfloor}$;

- outputting the verification key $VK$ as being $VK = (N, z, V_0, V_1, h_0, h_1)$;
- for each $i \in \{1, ..., n\}$, defining the $i$-th private key

share $SK_i = (W_{1,i}, W_{2,i}, P_1(i), P_2(i)) \in (\mathbb{Z}_N^*)^2 \times \mathbb{Z}_p^2$ (obviously, the order of the components of the $SK_i$ is not fixed, and can be reordered depending the protocol or the way the $i$-th private key share is handled and used by an electronic device), where

$$W_{1,i} = (V_1 . S_i^{-P_1(i) \bmod p})^{1/e_i} \bmod N = z^{r_1 \prod_{j=1}^n e_i + \sum_{k=1}^n (P(k) \bmod p) . \prod_{j=1, j \neq i,k}^n e_j} \quad \text{and}$$

$$W_{2,i} = (V_2 . S_i^{-P_2(i) \bmod p})^{1/e_i} \bmod N = z^{r_2 \prod_{j=1}^n e_i + \sum_{k=1}^n (P(k) \bmod p) . \prod_{j=1, j \neq i,k}^n e_j}$$

- choosing hash functions $H: \{0,1\}^* \to \mathbb{Z}_p$, $G: \{0,1\}^* \to \{0,1\}^\lambda$, which will be modeled as random oracles in the security analysis;
- the public key consists of $PK = (\mathbb{G}, N, g, h, X, H, G)$

Then a secure distribution protocol can be executed in order to transmit the $n$ private key shares $SK_i$ for $i \in \{1, ..., n\}$, to electronic devices.

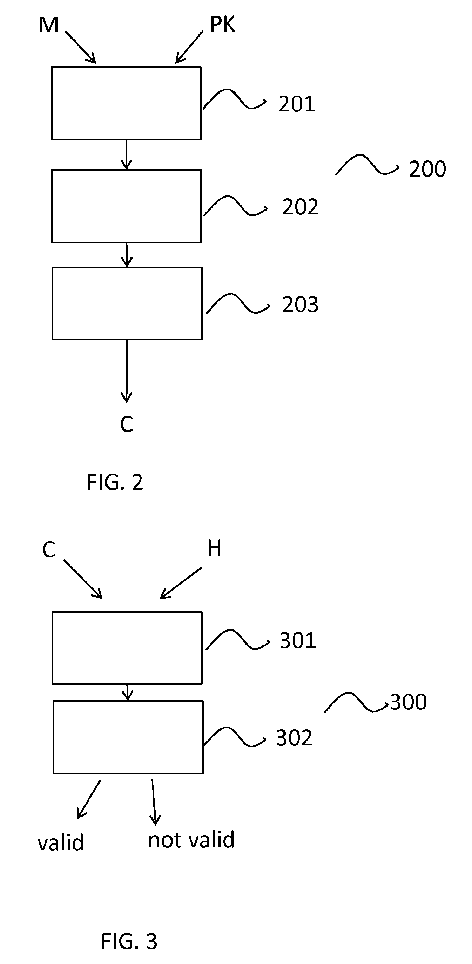

Figure 2 discloses a flowchart which depicts steps performed during the encryption process according to one embodiment of the disclosure.

In order to encrypt a plaintext $M \in \mathbb{G}$ (such plaintext $M$ corresponds to the representation in a group $\mathbb{G}$ of a data such as a binary file stored in a memory of an electronic device) the encryption process, referenced 200, comprising the following steps is performed by an electronic device:

- obtaining a public key $PK = (\mathbb{G}, N, g, h, X, H, G)$ and the plaintext $M \in \mathbb{G}$ to be encrypted;
- obtaining, in a step referenced 201, two random elements $r$, $s$ (via a random number generator device for example), each element belonging to the ring $\mathbb{Z}_p$;
- determining, in a step referenced 202, in function of elements of the public key $PK$, the random element $r$, and the plaintext $M$, a vector corresponding to $(C_0, C_1, C_2) = (M . X^r, g^r, h^r)$;
- determining, in a step referenced 203, a proof $\pi$ that $\log_g(C_1) = \log_h(C_2)$. This proof $\pi$ comprises two components: $\pi = (c, t')$, with $c = H(C_0, C_1, C_2, g^s, h^s)$ and $t' = s + c . r \bmod p$, where $H$ is a hash function defined in the public key. It should be noted that in one embodiment of the disclosure, the hash functions $H$ and $G$ can be obtained via another way, and do not form a part of the public key $PK$. This remark is also valid for other elements of the public key that can be shared previously between electronic devices such as $\mathbb{G}$, etc.;
- outputting the ciphertext $C = (C_0, C_1, C_2, \pi) = (C_0, C_1, C_2, c, t') \in \mathbb{G}^3 \times \mathbb{Z}_p^2$

Figure 3 discloses a flowchart which depicts steps performed during a ciphertext verification process according to one embodiment of the disclosure. Such ciphertext verification process enables the verification of the conformity of the ciphertext (obtained through the process related to the Figure 2) by using the proof comprised in the ciphertext, and the hash function $H$.

The process of verification, referenced 300, comprises steps of:

- obtaining the public key $PK$ and a ciphertext $C$, and a hash function $H$, as defined in the processes depicted in Figure 1 and Figure 2;
- verifying, in a step referenced 301, if the obtained ciphertext $C$ can be gathered as follows

$(C_0, C_1, C_2, \pi) \in \mathbb{G}^3 \times \mathbb{Z}_p{}^2,$ where $\pi$ should correspond to a proof;

- verifying, in a step referenced 302, the validity of the proof $\pi = (c, t')$ by determining the following value $H(C_0, C_1, C_2, g^{t'}$. $C_1{}^{-c}, h^{t'}$. $C_2{}^{-c}$ ), and comparing it with the value of $c$ ; in case of equality between the value of $c$ and the value of $N(C_0, C_1, C_2. g^{t'}. C_1{}^{-c}, h^{t'}. C_2{}^{-c})$, the proof $\pi$ is valid, and therefore it is ensured that $\log_g(C_1) = \log_h(C_2)$. Otherwise, a security issue is raised, meaning that the proof is not valid.

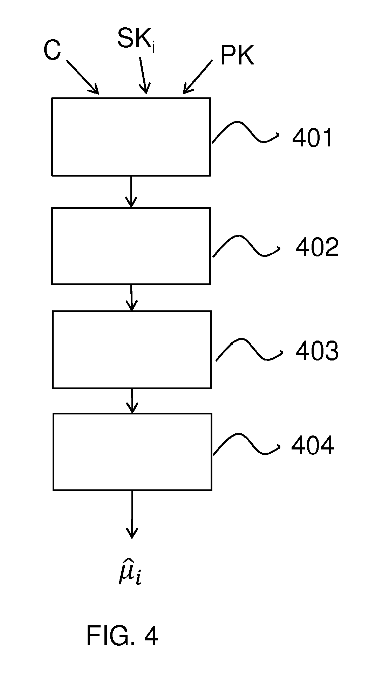

Figure 4 discloses a flowchart which depicts steps performed during a partial decryption process applied on a obtained ciphertext *C*, executed by one electronic device among the *t* electronic devices necessary to perform the complete decryption of the ciphertext (in order to recover the plaintext *M*).

The electronic device obtains a ciphertext *C*, and executes, in a step referenced 401, the process of the Figure 3 in order to check the validity of the obtained ciphertext *C*. Then, the electronic device executes steps of:

- obtaining a private key $SK_i = (W_{1,i}, W_{2,i}, P_1(i), P_2(i)) \in (\mathbb{Z}_N{}^*)^2 \times \mathbb{Z}_p{}^2$;

- in the case that the ciphertext has been verified, and appears to be "valid/ well formed", the share decrypt process determines a tuple $\hat{\mu}_i = (v_i, (D_{i,1}, D_{i,2}), (E_{i,1}, E_{i,2}), \pi_{\mu_i})$. Indeed, in a step referenced 402, the partial decryption $v_i = C_1{}^{P_1(i)\ mod\ p}$. $C_2{}^{P_2(i)\ mod\ p}$ is determined; such a step 402 can involve dedicated means comprised in the electronic device such as a particular hardware unit that speeds up the determination of the partial decryption $v_i$.
- In a step referenced 403, the elements $(D_{i,1}, D_{i,2})$, $(E_{i,1}, E_{i,2})$ corresponding to Elgamal encryptions, are obtained through the following computations:

$$\left(D_{i,1}, D_{i,2}\right) = (h_0{}^{t_{1,i}} \ mod\ N, W_{1,i}. h_1{}^{t_{1,i}} \ mod\ N)$$

$$\left(E_{i,1}, E_{i,2}\right) = (h_0{}^{t_{2,i}} \ mod\ N, W_{2,i}. h_1{}^{t_{2,i}} \ mod\ N)$$

where elements $W_{1,i}$ and $W_{2,i}$ over $\mathbb{QR}_N$ are obtained due to the knowledge of the private key $SK_i$, and elements $t_{1,i}$ and $t_{2,i}$ are random elements of $\mathbb{Z}_{\lfloor N/4 \rfloor}$. In a step referenced 404, an element $\pi_{\mu_i}$ that corresponds to a non-interactive proof is determined. Such proof ensures the knowledge of the integers $\tilde{t}_{1,i}, \tilde{t}_{2,i}, P_1(i)$ and $P_2(i)$ such that:

$$D_{i,1}{}^{e_i} = h_0{}^{\tilde{t}_{1,i}} \ mod\ N \ (\text{eq. 1})$$

$$D_{i,2}{}^{e_i}. V_1{}^{-1} = S_i{}^{-P_1(i)} h_1{}^{\tilde{t}_{1,i}} \ mod\ N \ (\text{eq. 2})$$

$$E_{i,1}{}^{e_i} = h_0{}^{\tilde{t}_{2,i}} \ mod\ N (\text{eq. 3})$$

$$E_{i,2}{}^{e_i}. V_2{}^{-1} = S_i{}^{-P_2(i)} h_1{}^{\tilde{t}_{2,i}} \ mod\ N (\text{eq. 4})$$

$$v_i = C_1{}^{P_1(i)} \cdot C_2{}^{P_2(i)} \text{ (eq. 5)}$$

This signature of knowledge $\pi_{\mu_i}$ is obtained by applying the Fiat-Shamir heuristic using the random oracle G whose input includes the values $(i, (C_0, C_1, C_2), (D_{i,1}, D_{i,2}), (E_{i,1}, E_{i,2}))$.

It can be verified that equations (1)-(5) form a triangular discrete-log relation set. For this reason, the protocol described in the article _"Traceable signatures"_ by A. Kiayias et al., and published in the conference proceedings of Eurocrypt 2004, is a honest-verifier zero-knowledge proof of knowledge for the variables $\tilde{t}_{1,i}$, $\tilde{t}_{2,i}$, $P_1(i)$ and $P_2(i)$.

At last, the partial decryption share corresponding to the tuple $\hat{\mu}^i = (v_i, (D_{i,1} D_{i,2}), (E_{i,1}, E_{i,2}), \pi_{\mu_i})$ is output by the electronic device.

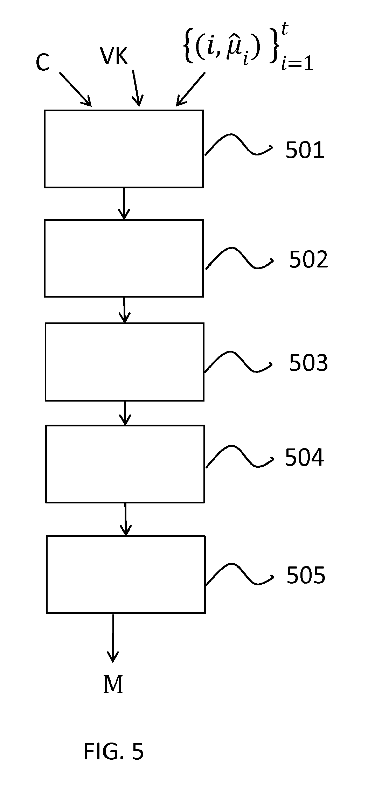

Figure 5 discloses a flowchart that depicts steps performed during a decryption process, when an electronic device obtains several partial decryptions that should be combined in order to recover a plaintext $M$.

The electronic device obtains a ciphertext $C$, and it is verified, in a step referenced 501, that the ciphertext can be parsed as follows $(C_0, C_1, C_2, \pi)$. Then, the electronic device obtains a verification key $VK$ being equal to $(N, z, V_1, V_2, y_0, y_1)$. It should be noted that such a verification key has a limited number of parameters. Indeed, the number of the parameters is not a function of the number of electronic devices involved in the proposed technique for obtaining the partial decryption shares. Moreover, the electronic device obtains a list of pairs $(i, \hat{\mu}_i)$.

Then, the electronic device performs the following steps of:

- checking, in a step referenced 502, if the element $\hat{\mu}_i$ can be properly parsed as $(v_i, (D_{i,1}, D_{i,2}), (E_{i,1}, E_{i,2}), \pi_{\mu_i})$. If the element $\hat{\mu}_i$ can not be parsed in this way, an error is raised, and the process can be stopped;
- verifying, in a step referenced 503, if the proof $\pi_{\mu_i}$ is a valid proof; and
- determining, in a step referenced 504, via a Lagrange interpolation process, the following element: $v = \Pi_{i \in s} v_i^{\Delta_{i,s}(0)} = C_1{}^x \cdot C_2{}^y = X^r$, which allows recovering the plaintext $M$ due to the fact that $M = C_0 / v$ that is determined in a step referenced 505.

It should be noted that the semantically secure (i.e., IND-CPA) secure version of the scheme -where ciphertexts consist of $(C_0, C_1, C_2)$ can be made robust against malicious adversaries in the same way. The resulting system is homomorphic (like the basic Elgamal scheme) and retains a constant-size public key.

From a security point of view, it can be proven that the scheme provides IND-CCA security in the random oracle model if the DDH assumption holds in $\mathbb{G}$ and in $\mathbb{QR}_N$.

The scheme also provides consistency in the random oracle model if the Strong RSA assumption holds in $\mathbb{QR}_N$.

One embodiment of the disclosure can be seen as a variant of the second construction of Shoup and Gennaro in the article "Securing Threshold Cryptosystems against Chosen Ciphertext Attack", published in the conference proceedings of Eurocrypt 1998: if $X \in \mathbb{G}$ denotes the public key of the receiver, the sender computes an Elgamal encryption $(C_0, C_1) = (M.X^r, g^r)$ of the plaintext $M$, and also includes $C_2 = h^r$ along with a Fiat-Shamir-like non-interactive proof that $\log_g(C_1) = \log_h(C_2)$. A difference with the technique proposed in the article _"Securing Threshold Cryptosystems against Chosen Ciphertext Attack"_ is that, while Shoup and Gennaro only consider static corruptions, ideas from the article _"Non-Interactive CCA2-Secure Threshold Cryptosystems with Adaptive Security: New Framework and Constructions"_ by B. Libert et al., published in the conference proceedings of TCC 2012, can be used in order to prove the security of the scheme against adaptive corruptions. To do this, it is needed to slightly modify the scheme and the shape of the public key: instead of choosing $X = g^x$ as in the article _"Securing Threshold Cryptosystems against Chosen Ciphertext Attack"_, the following element is chosen: $X = g^x h^y$, where $(x,y) \in \mathbb{Z}_p^2$ is the private key. The proof of IND-CCA security thus significantly departs from the article _"Securing Threshold Cryptosystems against Chosen Ciphertext Attack"_ and rather adapts the ideas of the article _"Non-Interactive CCA2-Secure Threshold Cryptosystems with Adaptive Security: New Framework and Constructions"_ in order to use them in the random oracle model. The main difference with the previous mentioned articles is the way to render the scheme robust against malicious adversaries. In these articles, each private key share $SK_i$ has a corresponding public component $VK_i$, which allows publicly testing the validity of decryption shares and which must be included in the verification key. As a consequence, the size of the verification key inevitably grows with the number of servers.

One advantage of one embodiment of the disclosure is to solve this problem by using a verification key consisting of a constant-size commitment V to the vector of private key shares **SK** = $(SK_1,..,SK_n)$. In order to prove the correctness of their partial decryptions, shareholders will have to provide a non-interactive proof that they indeed used the private key share $SK_i$ in the $i$-th position of the commited vector. To do this, each private key share is augmented with a piece of evidence that $SK_i$ is actually the i-th coordinate **of SK.** In order to retain $O(1)$-size private key shares, it is needed a concise vector commitment, where the latter piece of evidence has constant size. However, any concise vector commitment schemes cannot be used: indeed, constructions based on discrete-logarithm-related assumptions involve O(n)-size public keys and they would not provide any advantage here. Fortunately, the RSA-based construction of the article _"Concise Vector Commitments and their Applications to Zero-Knowledge Elementary Databases"_ by D. Catalano et al., published on the report 2011/495 on the Cryptology ePrint Archive, can be modified (by defining the prime RSA exponents $\{e_i\}_{i=1}^n$ to be the first n prime numbers exceeding a certain bound) so as to have constant-size public keys as well. The price to pay is that such construction relies on the strong RSA assumption, instead of the standard RSA assumption.

One problem to solve is that, when proving the validity of their partial decryptions, decryption servers have to provide a non-interactive proof of equality of certain secret exponents and this non-interactive proof has to be carried out over groups of hidden order. When proving the consistency property of the scheme, it should be guaranteed that the knowledge extractor -which rewinds the adversary so as to extract values that this adversary proves knowledge of-will not get stuck because it has to compute inversions modulo an unknown group order.

For example, if it is used the commitment scheme described in the previous mentioned article _"Concise Vector Commitments and their Applications to Zero-Knowledge Elementary Databases",_ the commitment to **SK=** $(SK_1,..,SK_n)$ is of the form $(V_1,V_2)$, with $V_1 = \prod_{i=1}^n S_i^{P_1(i) mod\ p}\ mod\ N$ and

$$V_2 = \prod_{i=1}^n S_i^{P_2(i) mod\ p}\ mod\ N$$ , where $SK_i = (P_1(i) mod\ p, P_2(i)\ mod\ p)$, for some polynomials $P_1(Z),P_2(Z)$. In addition, each server $i$ holds values $W_{1,i} = (V_1.S_i^{-P_1(i) mod\ p})^{1/e_i}\ mod\ N$ , and

$$W_{2,i} = (V_2.S_i^{-P_2(i) mod\ p})^{1/e_i}\ mod\ N$$ , such that $V_1 = W_{1,i}^{e_i}.S_i^{P_1(i) mod\ p}\ mod\ N$ and

$$V_2 = W_{2,i}^{e_i}.S_i^{P_2(i) mod\ p}\ mod\ N.$$ When computing the partial decryption $v_i = C_1^{P_1(i)}.C_2^{P_2(i)}$ of a ciphertext $(C_0,C_1,C_2) = (M.X^r,g^r,h^r)$ the natural thing to do is to have server $i$ provide a non-interactive proof of knowledge of $(W_{1,i},W_{2,i},P_1(i) mod\ p,P_2(i)\ mod\ p)$ such that

$$V_1 = W_{1,i}^{e_i}.S_i^{P_1(i) mod\ p}\ mod\ N \qquad (eq.\ 6)$$

$$V_2 = W_{2,i}^{e_i}.S_i^{P_2(i) mod\ p}\ mod\ N \qquad (eq.\ 7)$$

$$v_i = C_1^{P_1(i)\ mod\ p}.C_2^{P_2(i)\ mod\ p} \qquad (eq.\ 8)$$

The problem is that proving (6)-(8) requires to simultaneously prove knowledge of $e_i$-th roots $(W_{1,i},W_{2,i})$, and discrete logarithms $(P_1(i) mod\ p, P_2(i) mod\ p)$. To do this, one natural idea is to use Okamoto's RSA-based identification scheme (described in the article entitled: _"Provably Secure and Practical Identification Schemes and Corresponding Signature Schemes"_, by T. Okamoto, and published in the conference proceedings of Crypto 1992). While this identification scheme allows proving knowledge of a representation $(P_1(i), W_{1,i})$ satisfying (6) and such that $P_1(i) \bmod p < e_i$, it is not clear how the scheme can be adapted so as to securely prove knowledge of a tuple $(W_{1,i}, W_{2,i}, P_1(i) \bmod p, P_2(i) \bmod p)$ that simultaneously satisfies the three equations (6)-(8). One proposed solution (described in this document) to this problem is to translate equations (6)-(8) into a discrete-log relation set over the cyclic group $\mathbb{QR}_N$ of quadratic residues in $\mathbb{Z}_N^*$: for such relations, efficient proofs of knowledge exist under the strong RSA assumption. To this end, first of all, it is necessary to restrict the vector commitments $(V_1, V_2)$ and their coordinate-wise openings $(W_{1,i}, W_{2,i})$ to be squares modulo $N$. In addition, when a server $i$ has to prove the validity of its decryption share, this server has to encrypt his $e_i$-th roots $(W_{1,i}, W_{2,i})$ using the Elgamal encryption scheme over the subgroup of quadratic residues $\mathbb{QR}_N$. These two Elgamal ciphertexts actually serve as perfectly binding commitments to - rather than encryptions of - the quadratic residues $(W_{1,i}, W_{2,i})$ as they are computed under public keys $(h_0, h_1) \in \mathbb{QR}_N^2$ whose corresponding private keys are not available to any party.

The results may find applications in other protocols where decryption capabilities should be shared among several parties. For example, the teachings of the present disclosure can be applied to auction protocols:Juels used threshold variants of Elgamal (as well as the threshold plaintext equality tests of the article *"Mix and Match: Secure Function Evaluation via Ciphertexts"* by M. Jakobsson et al., published in the conference proceedings of Asiacrypt 2000) to construct privacy-preserving targeted advertising protocols in the article *"Targeted Advertising ... And Privacy Too"*, published in the conference proceedings of CT-RSA 2001. Using the IND-CPA secure version of the present disclosure, the protocols proposed by Juels can be made robust against malicious adversaries while keeping a 0(1)-size public key at the server's side.

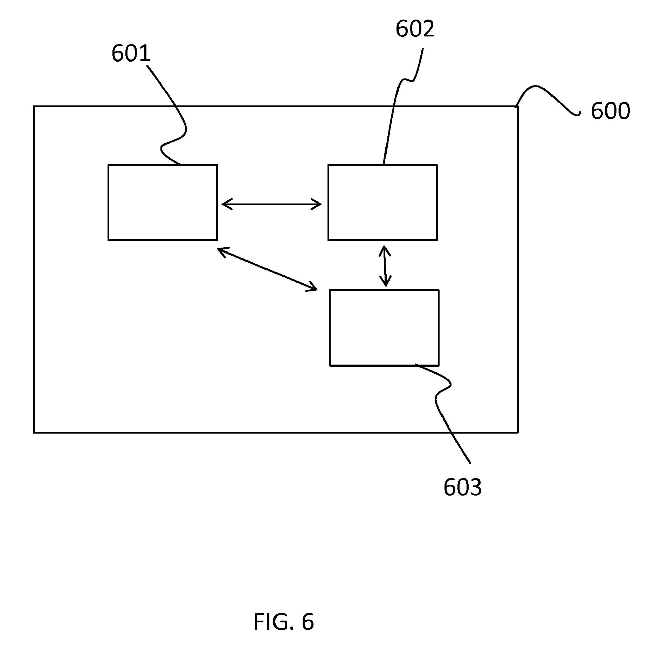

Figure 6 presents a device that can be used to perform one or several steps of methods/processes disclosed in the present document.

Such an electronic device referenced 600 comprises a computing unit (for example a CPU, for *"Central Processing Unit")*, referenced 601, and one or several memory units (for example a RAM (for *"Random Access Memory"*) block in which intermediate results can be stored temporarily during the execution of instructions of a computer program, or a ROM block in which, among other things, computer programs are stored, or an EEPROM (*"Electrically-Erasable Programmable Read-Only Memory"*) block, or a flash block) referenced 602. Computer programs are made of instructions that can be executed by the computing unit. The device 600 can also comprise a dedicated unit, referenced 603, constituting an input-output interface to allow the device 600 to communicate with other electronic devices. In particular, this dedicated unit 603 can be connected with an antenna (in order to perform communication without contacts), or with serial ports (to carry communications based on physical "contacts"). Let's remark that the arrows in Figure 6 mean that the linked unit can exchange data through buses.

In an alternative embodiment, some or all of the steps of the method previously described, can be implemented in hardware in a programmable FPGA (*"Field Programmable Gate Array"*) component or in an ASIC (*"Application-Specific Integrated Circuit"*) component.

In an alternative embodiment, some or all of the steps of the method previously described, can be executed on an electronic device comprising memory units and processing units as the one disclosed in the Figure 6.

## Claims

1. Method for encrypting a plaintext $M \in \mathbb{G}$, where $\mathbb{G}$ is a DDH-hard group of prime order $p$, the method being executed by an electronic device, and being **characterized in that** it comprises:

   - obtaining a public key $PK = (\mathbb{G}, N, g, h, X, H, G)$ where $N$ is a RSA module, elements $g, h$ are random elements belonging to said group $\mathbb{G}$, $X = g^x h^y \in \mathbb{G}$, where elements $x, y$ are random values from a ring $\mathbb{Z}_p$, and $H, G$ are hash functions;

   - obtaining (201) two random elements $r, s$, each element belonging to the ring $\mathbb{Z}_p$;
   - determining (202) a vector being $(C_0, C_1, C_2) = (M.X^r, g^r, h^r)$;
   - determining (203) a proof $\pi$ that $\log_g(C_1) = \log_h(C_2)$, said proof comprising two components $c, t'$, with $c = H(C_0, C_1, C_2, g^s, h^s)$ and $t' = s + c. r \bmod p$;

- delivering a ciphertext $C = (C_0, C_1, C_2, \pi) = (C_0, C_1, C_2, c, t') \in \mathbb{G}^3 \times \mathbb{Z}_p^{\ 2}$.

2. Method for publicly verifying a ciphertext $C$, said method being executed on an electronic device, and being **characterized in that** it comprises:

- verifying (301) that said ciphertext $C$ belongs to $\mathbb{G}^3 \times \mathbb{Z}_p^{\ 2}$, where $\mathbb{G}$ is a DDH-hard group of prime order $p$; in the case that said ciphertext $C$ belongs to $\mathbb{G}^3 \times \mathbb{Z}_p^{\ 2}$ meaning that $C = (C_0, C_1, C_2, \pi)$, with proof $\pi = (c, t') \in \mathbb{Z}_p^{\ 2}$, the method further comprises:

  - obtaining, from a public key, an element $g$ belonging to said group $\mathbb{G}$ and a hash function $H$;
  - verifying (302) a validity of said proof $\pi$ by determining a value $H(C_0, C_1, C_2, g^{t'} \cdot C_1^{-c}, h^{t'} \cdot C_2^{-c})$, and comparing it with a value of c;
  - outputting that said proof $\pi$ is valid in case of equality between the value of $c$ and the value of $H(C_0, C_1, C_2, g^{t'} \cdot C_1^{-c}, h^{t'} \cdot C_2^{-c})$.

3. Method for determining at least one partial decryption share from a ciphertext C, in a threshold cryptosystem, said method being executed on an electronic device, and being **characterized in that** it comprises:

- verifying that said ciphertext $C$ belongs to $\mathbb{G}^3 \times \mathbb{Z}_p^{\ 2}$, where $\mathbb{G}$ is a DDH-hard group of prime order $p$; in the case that said ciphertext C belongs to $\mathbb{G}^3 \times \mathbb{Z}_p^{\ 2}$ meaning that C = $(C_0, C_1, C_2, \pi)$, with proof $\pi = (c, t') \in \mathbb{Z}_p^{\ 2}$, the method further comprises:

  - obtaining a private key $SK_i$ comprising a secret element and a piece of information that said private key $SK_i$ is an i-th coordinate of a secret key vector, said piece of information being derived from a same verification key for each private key;
  - determining an encryption (403) of said piece of information, delivering at least an encrypted piece of information;
  - determining a non-interactive proof of knowledge (404) for said secret element and said encrypted piece of information;
  - determining a partial decryption part (402) from said ciphertext and said secret element, said at least one partial decryption share being a concatenation of said encrypted piece of information, said non-interactive proof of knowledge and said partial decryption part.

4. Method for verifying a validity of at least one partial decryption share generated according to claim 3, with a verification key, in a threshold cryptosystem, said method being executed on an electronic device, and being **characterized in that** it comprises combining elements of said a verification key with encrypted piece of information comprised in said of at least one partial decryption share and **in that** said verification key comprises a number of elements which is independent of a number of electronic devices involved in said threshold cryptosystem .

5. Method for deciphering a ciphertext C, said method being executed on an electronic device, and being **characterized in that** it comprises:

- verifying that said ciphertext $C$ belongs to $\mathbb{G}^3 \times \mathbb{Z}_p^{\ 2}$, where $\mathbb{G}$ is a DDH-hard group of prime order $p$; in the case that said ciphertext C belongs to $\mathbb{G}^3 \times \mathbb{Z}_p^{\ 2}$ meaning that C = $(C_0, C_1, C_2, \pi)$, with proof $\pi = (c, t') \in \mathbb{Z}_p^{\ 2}$, the method further comprises:

- obtaining at least t partial decryption shares generated according to claim 3 ;
- verifying validity of non-interactive proof of knowledge comprised in each partial decryption share;
- combining each partial decryption part comprised in at least t partial decryption shares, with a part of said ciphertext *C*, said combining delivering a plaintext M.

**6.** A computer-readable and non-transient storage medium storing a computer program comprising a set of computer-executable instructions to implement a method for cryptographic computations when the instructions are executed by a computer, wherein the instructions comprise instructions, which when executed, configure the computer to perform at least one of the methods of claims 1 to 5.

**7.** Electronic device comprising means for encrypting a plaintext $M \in \mathbb{G}$, where $\mathbb{G}$ is a DDH-hard group of prime order *p*, said electronic device being **characterized in that** it comprises:

- means for obtaining a public key $PK = (\mathbb{G}, N, g, h, X, H, G)$ where *N* is a RSA module, elements *g, h* are random elements belonging to said group $\mathbb{G}$, $X = g^x h^y \in \mathbb{G}$, where elements *x, y* are random values from a ring $\mathbb{Z}_p$, and *H, G* are hash functions;

- means for obtaining two random elements *r, s*, each element belonging to the ring $\mathbb{Z}_p$;
- means for determining a vector being $(C_0, C_1, C_1) = (M.X^r, g^r, h^r)$;
- means for determining a proof $\pi$ that $\log_g(C_1) = \log_h(C_2)$, said proof comprising two components *c, t'*, with *c* = $H(C_0, C_1, C_2, g^s, h^s)$ and *t' = s + c. r mod p* ;

- means for delivering a ciphertext $C = (C_0, C_1, C_2, \pi) = (C_0, C_1, C_2, c, t') \in \mathbb{G}^3 \times \mathbb{Z}_p{}^2$.

**8.** Electronic device comprising means for publicly verifying a ciphertext *C*, said electronic device being **characterized in that** it comprises:

- means for verifying that said ciphertext *C* belongs to $\mathbb{G}^3 \times \mathbb{Z}_p{}^2$, where $\mathbb{G}$ is a DDH-hard group of prime order *p*; in the case that said ciphertext *C* belongs to $\mathbb{G}^3 \times \mathbb{Z}_p{}^2$ meaning that $C = (C_0, C_1, C_2, \pi)$, with proof $\pi = (c, t') \in \mathbb{Z}_p{}^2$, the electronic device further comprises:

- means for obtaining, from a public key, an element *g* belonging to said group $\mathbb{G}$ and a hash function *H*;
- means for verifying (302) a validity of said proof $\pi$ by determining a value $H(C_0, C_1, C_2, g^{t'}. C_1{}^{-c}, h^{t'}. C_2{}^{-c})$, and comparing it with a value of *c*;
- means for outputting that said proof $\pi$ is valid in case of equality between the value of c and the value of $H(C_0, C_1, C_2, g^{t'}, C_1{}^{-c}, h^{t'}. C_2{}^{-c})$.

**9.** Electronic device comprising means for determining at least one partial decryption share from a ciphertext *C*, in a threshold cryptosystem, said electronic device being **characterized in that** it comprises:

- means for verifying that said ciphertext *C* belongs to $\mathbb{G}^3 \times \mathbb{Z}_p{}^2$, where $\mathbb{G}$ is a DDH-hard group of prime order *p*; in the case that said ciphertext C belongs to $\mathbb{G}^3 \times \mathbb{Z}_p{}^2$ meaning that $C = (C_0, C_1, C_2, \pi)$, with proof $\pi = (c, t') \in \mathbb{Z}_p{}^2$, the electronic device further comprises:

- means for obtaining a private key *SK_i* comprising a secret element and a piece of information that said private key *SK_i* is an *i*-th coordinate of a secret key vector, said piece of information being derived from a same verification key for each private key;
- means for determining an encryption of said piece of information, delivering at least an encrypted piece of information;

- means for determining a non-interactive proof of knowledge for said secret element and said encrypted piece of information;
- means for determining a partial decryption part from said ciphertext and said secret element, said at least one partial decryption share being a concatenation of said encrypted piece of information, said non-interactive proof of knowledge and said partial decryption part.

**10.** Electronic device comprising means for deciphering a ciphertext C, said electronic device being **characterized in that** it comprises:

- means for verifying that said ciphertext $C$ belongs to $\mathbb{G}^3 \times \mathbb{Z}_p^2$, where $\mathbb{G}$ is a DDH-hard group of prime order $p$; in the case that said ciphertext $C$ belongs to $\mathbb{G}^3 \times \mathbb{Z}_p^2$ meaning that $C = (C_0,C_1,C_2,\pi)$, with proof

$\pi = (c, t') \in \mathbb{Z}_p^2$, the electronic device further comprises:

- means for obtaining at least t partial decryption shares generated according to an electronic device of claim 9 ;
- means for verifying validity of non-interactive proof of knowledge comprised in each partial decryption share;
- means for combining each partial decryption part comprised in at least t partial decryption shares, with a part of said ciphertext $C$, said means for combining delivering a plaintext M.

FIG. 1

FIG. 2

FIG. 3

C  SK$_i$  PK

401

402

403

404

$\hat{\mu}_i$

FIG. 4

$$C \qquad VK \qquad \left\{ \left( i, \hat{\mu}_i \right) \right\}_{i=1}^{t}$$

FIG. 5

FIG. 6

Europäisches
Patentamt

European
Patent Office

Office européen
des brevets

# EUROPEAN SEARCH REPORT

Application Number

EP 14 30 6015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SHOUP V ET AL: "SECURING THRESHOLD CRYPTOSYSTEMS AGAINST CHOSEN CIPHERTEXT ATTACK", JOURNAL OF CRYPTOLOGY, SPRINGER, NEW YORK, NY, US, vol. 15, no. 2, 1 January 2002 (2002-01-01), pages 75-96, XP001112787, ISSN: 0933-2790 | 2-10 | INV. H04L9/08 H04L9/30 |
| A | * section 5 (bottom of page 87 to top of page 89) section 6 (page 91) * | 1 | |
| A,D | Benoît Libert ET AL: "Non-interactive CCA-Secure Threshold Cryptosystems with Adaptive Security: New Framework and Constructions" In: "Field Programmable Logic and Application", 1 January 2012 (2012-01-01), Springer Berlin Heidelberg, Berlin, Heidelberg, XP055131489, ISSN: 0302-9743 ISBN: 978-3-54-045234-8 vol. 7194, pages 75-93, DOI: 10.1007/978-3-642-28914-9_5, * Introduction + section $\bar{5}$ * | 1 | |

TECHNICAL FIELDS
SEARCHED      (IPC)

H04L

-/--

The present search report has been drawn up for all claims

| Place of search | Date of completion of the search | Examiner |
|---|---|---|
| Munich | 18 December 2014 | Manet, Pascal |

EPO FORM 1503 03.82 (P04C01)

Europäisches
Patentamt

European
Patent Office

Office européen
des brevets

## EUROPEAN SEARCH REPORT

Application Number

EP 14 30 6015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RONALD CRAMER ET AL: "Universal Hash Proofs and a Paradigm for Adaptive Chosen Ciphertext Secure Public-Key Encryption", INTERNATIONAL ASSOCIATION FOR CRYPTOLOGIC RESEARCH,, vol. 20011212:121631, 12 December 2001 (2001-12-12), pages 1-40, XP061000223, [retrieved on 2001-12-12] * sections 8.1.2 and 8.2.2 section 1 (practical CCA-secure) * | 1 | |
| A,D | DARIO CATALANO ET AL: "Vector Commitments and Their Applications", 26 February 2013 (2013-02-26), PUBLIC-KEY CRYPTOGRAPHY PKC 2013, SPRINGER BERLIN HEIDELBERG, BERLIN, HEIDELBERG, PAGE(S) 55 - 72, XP047022613, ISBN: 978-3-642-36361-0 * section 2.2 * | 1-10 | |
| | | | TECHNICAL FIELDS SEARCHED (IPC) |

The present search report has been drawn up for all claims

| Place of search | Date of completion of the search | Examiner |
|---|---|---|
| Munich | 18 December 2014 | Manet, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. SHOUP ; R. GENNARO.** Securing threshold cryptosystems against chosen ciphertext attack. *conference proceedings of Eurocrypt*
- **P.-A. FOUQUE ; D. POINTCHEVAL.** Threshold cryptosystems Secure against chosen-ciphertext attacks. *conference proceedings of Asiacrypt,* 2001
- **R. CRAMER et al.** A practical public key cryptosystem provably secure against adaptive chosen ciphertext attack. *conference proceedings of Crypto,* 1998
- **SHOUP ; GENNARO.** *Securing threshold cryptosystems against chosen ciphertext attack*
- **CANETTI ; GOLDWASSER.** An efficient threshold public key cryptosystem secure against adaptive chosen ciphertext attack. *conference proceedings of Eurocrypt,* 1999
- Share Conversion, Pseudorandom secret-sharing and applications to secure computation. *conference proceedings of TCC,* 2005
- **M. ABE.** Robust Distributed Multiplication without Interaction. *conference proceedings of Crypto,* 1999
- **P. MACKENZIE.** An Efficient Two-Party Public Key Cryptosystem Secure against Adaptive Chosen Ciphertext Attack. *conference proceedings of PKC,* 2003
- **Y. DODIS et al.** Chosen-Ciphertext Security of Multiple Encryption. *conference proceedings ofTCC,* 2005
- Chosen Ciphertext Secure Public Key Threshold Encryption Without Random Oracles. *conference proceedings of the conference CT-RSA,* 2006
- Threshold and Revocation Cryptosystems via Extractable Hash Proofs. *conference proceedings of Eurocrypt,* 2011
- **CANETTI et al.** Adaptive Security for Threshold Cryptosystems. *conference proceedings of Crypto,* 1999
- **J. ALMANSA et al.** Simplified Threshold RSA with Adaptive and Proactive Security. *conference proceedings of Eurocrypt,* 2006
- Adaptively-Secure Distributed Public-Key System. *conference proceedings of ESA,* 1999

- Adaptively-Secure Optimal-Resilience Proactive RSA. *conference proceedings of Asiacrypt,* 1999
- **JARECKI ; LYSYANSKAYA.** Adaptively Secure Threshold Cryptography: Introducing Concurrency, Removing Erasures. *conference proceedings of Eurocrypt,* 2000
- **LYSYANSKAYA ; PEIKERT.** Adaptive Security in the Threshold Setting: From Cryptosystems to Signature Schemes. *conference proceedings of Asiacrypt,* 2001
- Adaptively Secure Feldman VSS and Applications to Universally-Composable Threshold Cryptograph. *conference proceedings of Crypto,* 2004
- **QIN et al.** Threshold Public-Key Encryption with Adaptive Security and Short Ciphertexts. *conference proceedings of ICICS,* 2010
- **LIBERT ; YUNG.** Non-interactive CCA-Secure Threshold Cryptosystems with Adaptive Security: New Framework and Constructions. *conference proceedings of TCC,* 2012
- Adaptively Secure Non-Interactive Threshold Cryptosystems. *conference proceedings of ICALP,* 2011
- **SHOUP ; GENNARO.** Securing Threshold Cryptosystems against Chosen Ciphertext Attack. *conference proceedings of Eurocrypt,* 1998
- **SHOUP ; GENNARO.** *Securing Threshold Cryptosystems against Chosen Ciphertext Attack*
- **B. LIBERT.** *Non-Interactive CCA2-Secure Threshold Cryptosystems with Adaptive Security: New Framework and Constructions*
- **D. CATALANO.** *Concise Vector Commitments and their Applications to Zero-Knowledge Elementary Databases*
- **T. OKAMOTO.** Provably Secure and Practical Identification Schemes and Corresponding Signature Schemes. *conference proceedings of Crypto,* 1992
- **M. JAKOBSSON et al.** Mix and Match: Secure Function Evaluation via Ciphertexts. *conference proceedings of Asiacrypt,* 2000
- Targeted Advertising ... And Privacy Too. *conference proceedings of CT-RSA,* 2001